# EUROPÄISCHE PATENTANMELDUNG

(11) **EP 3 205 385 A1**
(43) Veröffentlichungstag der Anmeldung: **16.08.2017**
(21) Anmeldenummer: 16155686.5
(22) Anmeldetag: 15.02.2016
(51) Int. Cl.: B01D 3/06, B01D 3/10, B01D 5/00, F04C 19/00

(54) **VERFAHREN ZUR VAKUUMDESTILLATION EINER ORGANISCHEN VERBINDUNG**

(71) Anmelder: Evonik Degussa GmbH, 45128 Essen (DE)
(72) Erfinder: THEISSEN, Ferdinand, 53332 Bornheim (DE); ZARFL, Theo, 50374 Erftstadt (DE)

(57) **Zusammenfassung**

Gegenstand der Erfindung ist ein Verfahren zur Vakuumdestillation mindestens einer organischen Verbindung mittels einer Vakuumeinrichtung umfassend eine Vakuumpumpe (11) und eine der Vakuumpumpe vorgeschaltete eine Absorptionsflüssigkeit enthaltende Absorptionsvorrichtung (9), wobei die Absorptionsflüssigkeit von der zu destillierenden Verbindung verschieden ist und mit ihr eine Additionsverbindung bildet und/oder die Absorptionsflüssigkeit mit der zu destillierenden Verbindung identisch ist. Ferner betrifft die Erfindung auch eine Vakuumeinrichtung umfassend eine Vakuumpumpe (11) und eine der Vakuumpumpe vorgeschaltete Absorptionsvorrichtung (9), die eine erfindungsgemäße Absorptionsflüssigkeit enthält.

## Beschreibung

Die vorliegende Erfindung betrifft ein Verfahren zur Vakuumdestillation mindestens einer organischen Verbindung mittels einer Vakuumeinrichtung mit einer Absorptionsflüssigkeit, die mit der zu destillierenden Verbindung nicht identisch ist und mit ihr ein Addukt bildet und/oder mit der zu destillierenden Verbindung identisch ist.

Zum Abpumpen von Gasen oder zur Destillation von Verbindungen werden im industriellen Maßstab typischerweise Flüssigkeitsringpumpen eingesetzt.

Eine Flüssigkeitsringpumpe setzt sich aus einem zylindrischen Gehäuse und einem darin exzentrisch angeordneten, sternförmigen Flügelrad bzw. Laufrad zusammen. Über einen auf der Stirnseite des Gehäuses nicht zentrisch angeordneten Ansatzstutzen ist die Flüssigkeitsringpumpe mit einem Raum verbunden, aus dem ein Saugmedium ausgesaugt werden soll. In dem Gehäuse der Flüssigkeitsringpumpe befindet sich eine Flüssigkeit, im einfachsten Fall Wasser, die bei Rotation des Flügelrads oder des Gehäuses einen zum Gehäuse konzentrisch angeordneten Flüssigkeitsring ausbildet, der die von den Flügeln des Flügelrads ausgebildeten Flügelradkammern abdichtet. Auf Grund der exzentrischen Anordnung des Flügelrads tauchen während der Rotation die Flügel des Flügelrads unterschiedlich tief in den Flüssigkeitsring ein. Die in einer Flügelradkammer befindliche Gasphase wird verdichtet, wenn die Flügel, welche die Flügelradkammer ausbilden, tiefer in den Flüssigkeitsring eintauchen. Auf Grund der Exzentrizität des Flügelrads befindet sich eine Flügelradkammer mit verdichteter Gasphase immer gegenüber einer Flügelradkammer deren Flügel weniger tief in die Ringflüssigkeit eintauchen, was zu einer Vergrößerung des Gasvolumens in dieser Flügelradkammer führt. Durch den Ansatzstutzen wird das Saugmedium in die dem Ansatzstutzen benachbarte Flügelradkammer eingesogen. Bei Rotation wirkt daher die von Ringflüssigkeit und Flügelrad gebildete Einheit wie ein Kolben, dessen Segmente abwechselnd verdichten und saugen.

Ein Nachteil von Flüssigkeitsringpumpen besteht darin, dass das Saugmedium immer in Kontakt kommt mit der als Betriebsmedium eingesetzten Ringflüssigkeit. Es ist daher unvermeidbar, dass sowohl das Betriebsmedium als auch das Saugmedium durch Kontakt miteinander verunreinigt werden. Handelt es sich bei dem Saugmedium um eine Verbindung mit Wertstoffpotential, stellt die Verunreinigung mit der Ringflüssigkeit ein erhebliches Problem für die Rückintegration bzw. weitere Verwendung dieser Verbindung dar. Denn in der Regel ist eine Freisetzung der abgesaugten Verbindung in Reinform aus der Ringflüssigkeit, wenn überhaupt, nur mit entsprechendem Aufwand möglich, beispielsweise durch eine zusätzliche Destillation wie im US-Patent 4,282,013 beschrieben.

Das US-Patent 4,282,013 beschreibt eine Destillation von Roh-Maleinsäureanhydrid mittels einer Flüssigkeitsringpumpe deren Ringflüssigkeit von einem Absorptionsmittel für Maleinsäureanhydrid ausgebildet wird, gefolgt von einer weiteren Destillation bei der das leichter siedende Maleinsäureanhydrid von dem höher siedenden Absorptionsmittel abgetrennt wird. Diese Technik ist allerdings nur auf solche Verbindungen anwendbar, die einen relativ niedrigen Siedepunkt haben, wie beispielsweise das eingesetzte Maleinsäureanhydrid mit einem Siedepunkt von 53°C, und zudem sowohl thermodynamisch als auch kinetisch stabil sind. Darüber hinaus ist die destillative Rückgewinnung des Maleinsäureanhydrids mit erheblichen zusätzlichen Investitions- und Energiekosten verbunden. Daher ist das Verfahren gemäß der technischen Lehre der US 4,282,013 nicht attraktiv für industrielle Anwendungen.

Die Verunreinigung der Betriebsflüssigkeit einer Pumpe, insbesondere der Ringflüssigkeit einer Flüssigkeitsringpumpe, mit der abgesaugten Verbindung stellt insbesondere dann ein Problem dar, wenn das Saugmedium eine schwefelhaltige Verbindung ist. Denn dann muss das Betriebsmedium aufwendig entsorgt oder verbrannt werden. Ein zusätzlicher Nachteil bei der Verbrennung von schwefelhaltigen Medien besteht darin, dass das Abgas zur Vermeidung von Schwefeldioxid-Emissionen entschwefelt werden muss, was mit hohen Investitions- und Betriebskosten verbunden ist.

Der vorliegenden Erfindung liegt daher die Aufgabe zugrunde, ein Verfahren zur Vakuumdestillation einer organischen Verbindung mittels einer Vakuumeinrichtung bereitzustellen, das eine vollständige Rückintegration der zu destillierenden organischen Verbindung unter Vermeidung der Entstehung von Abwässern und unter zumindest deutlicher Reduzierung von Gasemissionen und ohne eine aufwendige Entschwefelung ermöglicht.

Erfindungsgemäß wird diese Aufgabe dadurch gelöst, indem die Vakuumeinrichtung eine Absorptionsflüssigkeit enthält, die entweder mit der zu destillierenden organischen Verbindung nicht identisch ist und mit ihr eine Additionsverbindung ausbildet, was eine chemische Absorption darstellt, und/oder die Absorptionsflüssigkeit mit der zu destillierenden organischen Verbindung identisch ist, was zu einer physikalischen Absorption führt. Eine physikalische Absorption der zu destillierenden organischen Verbindung wird erfindungsgemäß dadurch erreicht, dass die Vakuumeinrichtung eine Absorptionsflüssigkeit enthält, die mit einer zu destillierenden organischen Verbindung identisch ist, so dass die zu destillierende organische Verbindung in der von der Absorptionsflüssigkeit ausgebildeten Phase im Wesentlichen vollständig aufgenommen wird. Wenn die zu destillierende organische Verbindung nicht mit der Absorptionsflüssigkeit identisch ist, wird eine chemische Absorption der zu destillierenden organischen Verbindung dadurch erreicht, indem die Absorptionsflüssigkeit mit der zu destillierenden organischen Verbindung eine Additionsverbindung ausbildet. Befinden sich in der abgesaugten Gasphase unterschiedliche Verbindungen, wird die Absorptionsflüssigkeit so gewählt, dass sie von einer der zu destillierenden organischen Verbindung verschieden ist und mit dieser eine Additionsverbindung bildet, während sie mit der anderen zu destillierenden organischen Verbindung identisch ist und mit dieser eine gemeinsame Phase ausbildet.

Gegenstand der vorliegenden Erfindung ist daher ein Verfahren zur Vakuumdestillation mindestens einer organischen Verbindung mittels einer Vakuumeinrichtung umfassend eine Vakuumpumpe und eine der Vakuumpumpe vorgeschaltete eine Absorptionsflüssigkeit enthaltende Absorptionsvorrichtung, wobei die Absorptionsflüssigkeit von der zu destillierenden organischen Verbindung verschieden ist und mit ihr eine Additionsverbindung bildet und/oder die Absorptionsflüssigkeit mit der zu destillierenden organischen Verbindung identisch ist.

Hinsichtlich des Aufbaus der Absorptionsvorrichtung unterliegt das erfindungsgemäße Verfahren keinen Einschränkungen. Vorzugsweise handelt es sich bei der Absorptionsvorrichtung um einen in chemischen Prozessanlagen typischerweise eingesetzten Wäscher. Dies hat den Vorteil, dass ein zumindest teilweise kontinuierlicher Austausch der Absorptionsflüssigkeit auch während der Vakuumdestillation möglich ist, indem die mit der zu destillierenden organischen Verbindung und/oder der Additionsverbindung angereicherte Absorptionsflüssigkeit aus dem Wäscher abgeführt wird, bevorzugt unter Anwendung eines Vakuums entfernt wird, und durch eine der Menge der abgeführten Absorptionsflüssigkeit entsprechende Menge neuer, also nicht mit einer chemisch und/oder physikalisch absorbierten organischen Verbindung belastete, Absorptionsflüssigkeit ersetzt wird.

In einer Ausführungsform des erfindungsgemäßen Verfahrens ist die Absorptionsvorrichtung daher ein Wäscher.

Im Rahmen der vorliegenden Erfindung wird der Begriff Additionsverbindung bzw. Addukt so verwendet, dass er alle zusammengesetzten Moleküle bezeichnet, die durch Addition zweier Verbindungen unter Ausbildung einer kovalenten Bindung, gegebenenfalls unter gleichzeitiger Abspaltung von Wasser, gebildet werden. Beispiele für Additionsverbindungen im Rahmen der vorliegenden Erfindung sind die Produkte aus einer Michael-Addition, wie vorzugsweise das aus Acrolein und Methylmercaptan gebildete Michael-Addukt 3-Methylthiopropionaldehyd, die aus Alkoholen und Carbonylverbindungen gebildeten Halbacetale und die entsprechenden aus Thiolen bzw. Mercaptanen und Carbonylverbindungen gebildeten Halbmercaptale bzw. Hemithioacetale, wie vorzugsweise das aus 3-Methylthiopropionaldehyd und Mercaptan gebildete 1,3-Bis(methylthio)propan-1-ol.

Wenn die Absorptionsflüssigkeit mit der zu destillierenden organischen Verbindung identisch ist, führt dies zu einer Aufkonzentration der betreffenden Verbindung. Ist die zu destillierende organische Verbindung von der Absorptionsflüssigkeit verschieden, bildet sie mit der Absorptionsflüssigkeit ein Addukt. Dieses Addukt kann selber ein Wertstoffprodukt darstellen, welches entweder in den vorgelagerten Prozess zurückgeführt oder einem anderen Prozess zugeführt werden kann. Das erfindungsgemäße Verfahren ist jedoch nicht darauf beschränkt, dass nur eine einzelne Verbindung mittels des durch die Vakuumeinrichtung erzeugten Vakuums destilliert wird. Vielmehr ist das erfindungsgemäße Verfahren auch auf Fälle anwendbar, in denen mehr als eine Verbindung abdestilliert wird, wobei eine zu destillierende organische Verbindung mit der Absorptionsflüssigkeit identisch ist, und eine andere zu destillierende organische Verbindung von der Absorptionsflüssigkeit verschieden ist und mit dieser ein Addukt bildet.

Für sämtliche dieser Fälle sind Aldehyde als Absorptionsflüssigkeiten geeignet. Denn gesättigte und/oder ungesättigte Aldehyde reagieren mit Alkoholen und Mercaptanen zu Michael-Addukten, Halbacetalen sowie den entsprechenden Halbmercaptalen bzw. Hemithioacetalen. Zudem weisen Aldehyde mit Alkyl-, Alkenyl- oder Alkinylgruppen mit 2 bis 12 Kohlenstoffatomen niedrige Schmelzpunkte und gleichzeitig hohe Siedepunkt auf. Unter den Bedingungen, bei denen Absorptionsflüssigkeiten eingesetzt werden, sind derartige Verbindungen in den meisten Fällen flüssig und daher als Absorptionsflüssigkeit oder als Bestandteil einer Absorptionsflüssigkeit einsetzbar. Nur in Ausnahmefällen kann eine zusätzliche Kühlung erforderlich sein.

In einer Ausführungsform des erfindungsgemäßen Verfahrens entspricht die Absorptionsflüssigkeit daher der allgemeinen Formel (I) R¹-CHO, und R¹ bedeutet eine unsubstituierte oder eine mit einer CH₃O- oder einer CH₃S-Gruppe substituierte Alkyl-, Alkenyl- oder Alkinylgruppe mit 1 bis 12 Kohlenstoffatomen.

Die Anwesenheit von CH₃O- oder CH₃S-Gruppen in der eingesetzten Absorptionsflüssigkeit erhöht ihren Siedepunkt. Dies ist von Vorteil, um die mit hohen Temperaturen aus dem Kopf der Destillationskolonne in die Absorptionsflüssigkeit einströmende destillierte organische Verbindung wirksam absorbieren zu können, ohne dass die Absorptionsflüssigkeit gleichzeitig in den Bereich ihres Siedepunktes gelangt oder sogar zu sieden beginnt.

In einer weiteren Ausführungsform des erfindungsgemäßen Verfahrens entspricht die Absorptionsflüssigkeit daher der allgemeinen Formel (I) R¹-CHO, und R¹ bedeutet eine mit einer CH₃O- oder CH₃S-Gruppe substituierte Alkyl-, Alkenyl- oder Alkinylgruppe mit 1 bis 12 Kohlenstoffatomen.

Vorzugsweise weist der Rest R¹ des Aldehyds gemäß der allgemeinen Formel (I) 1 bis 6 Kohlenstoffatome auf, weiter bevorzugt enthält der Rest R¹ des Aldehyds 2 bis 4 Kohlenstoffatome. Ferner sind lineare Alkyl-, Alkenyl- bzw. Alkinylgruppen gegenüber verzweigten bevorzugt. Besonders bevorzugt ist der Rest R¹ daher eine lineare Alkylgruppe mit 1 bis 6 Kohlenstoffatomen, insbesondere mit 2 bis 4 Kohlenstoffatomen, die mit einer CH₃O- oder einer CH₃S-Gruppe substituiert ist.

Bevorzugt ist der Vakuumeinrichtung im erfindungsgemäßen Verfahren ein Phasenabscheider nachgeschaltet, um die nicht in der Absorptionsflüssigkeit absorbierten Verbindungen von der Absorptionsflüssigkeit und/oder von der aus der destillierten organischen Verbindung und der Absorptionsflüssigkeit gebildeten Additionsverbindung abzutrennen. Im Rahmen der vorliegenden Erfindung ist die Verwendung von 3-Methylthiopropionaldehyd als Absorptionsflüssigkeit besonders vorteilhaft. Denn die Siedetemperatur von 3-Methylthiopropionaldehyd beträgt bei Normaldruck 165°C und liegt somit deutlich über der Siedetemperatur von Wasser, das typischerweise als Ringflüssigkeit in Flüssigkeitsringpumpen und als Saugmedium in Strahlpumpen verwendet wird. Durch die Verwendung von 3-Methylthiopropionaldehyd oder höheren Homologen als Absorptionsflüssigkeit wird daher ein Übergang der Absorptionsflüssigkeit in die Gasphase vermieden.

In einer weiteren Ausführungsform des erfindungsgemäßen Verfahrens ist die Absorptionsflüssigkeit daher 3-Methylthiopropionaldehyd oder ein höheres Homologe davon.

Im Rahmen der vorliegenden Erfindung wird unter einem höheren Homologen von 3-Methylthiopropionaldehyd eine diesem Aldehyd strukturell ähnliche Verbindung verstanden, die sich nur durch eine zusätzliche CH₂-Einheit in der Alkylgruppe von dem 3-Methylthiopropionaldehyd unterscheidet. Das höhere Homologe von 3-Methylthiopropionaldehyd hat eine Alkylgruppe mit 3 bis 12 Kohlenstoffatomen, bevorzugt mit 3 bis 6 Kohlenstoffatomen, insbesondere mit 3 oder 4 Kohlenstoffatomen.

3-Methylthiopropionaldehyd ist zudem ein wichtiges Intermediat in der Herstellung von D,L-Methionin und des Methionin-Hydroxy-Analogen 2-Hydroxy-4-methyl-isobuttersäure (auch bekannt unter der Abkürzung MHA). Methionin ist eine essentielle Aminosäure, die primär als Ergänzungsmittel in Futtermitteln eingesetzt wird, und MHA ist ein flüssiger Ersatzstoff für Methionin, der jedoch eine geringere biologische Verfügbarkeit als Methionin aufweist.

Hergestellt wird 3-Methylthiopropionaldehyd (3-Methylmercaptopropionaldehyd, MMP) durch die (katalysierte) Reaktion von Methylmercaptan und Acrolein bei einem Druck von üblicherweise 1 bar und einer Temperatur von üblicherweise 20°C bis 100°C, wobei Methylmercaptan und Acrolein sowohl gasförmig als auch flüssig mit einander umgesetzt werden können. Das durch diese Reaktion erhaltene 3-Methylthiopropionaldehyd weist einen deutlich höheren Siedepunkt (165°C bis 166°C) auf als die Ausgangsstoffe Methylmercaptan (Siedepunkt: ca. 6°C) und Acrolein (Siedepunkt: 52°C). Daher kann das entstandene Roh-MMP leicht von den anderen leicht flüchtigen Substanzen aus dem Produktgemisch abgetrennt und durch Destillation weiter gereinigt werden. Bei der Destillation wird das 3-Methylthiopropionaldehyd von den Hochsiedern gasförmig abgetrennt und in einem Kondensator wieder verflüssigt. Diese Destillation wird unter vermindertem Druck durchgeführt, was zur Folge hat, dass für die Destillation niedrigere Temperaturen erforderlich sind, als wenn die Destillation unter Normaldruck durchgeführt würde. Dies hat den Vorteil, dass die Bildung von Hochsiedern vermieden wird. Üblicherweise werden für die Destillation von 3-Methylthiopropionalydehyd Drücke von weniger als 100 mbar und Temperaturen von 50°C bis 100°C angewendet. Das gereinigte MMP kann anschließend der Herstellung von Methionin zugeführt werden.

Üblicherweise werden zur Erzeugung des verminderten Drucks bzw. Vakuums in der Destillation von 3-Methylthiopropionaldehyd herkömmliche Gasstrahler oder Vakuumpumpen eingesetzt. Ein Nachteil von Gasstrahlern, auch als Vakuumstrahler bezeichnet, besteht jedoch, wie eingangs bereits erläutert, darin, dass das Strahlmedium immer in Kontakt mit dem betreffenden Prozessmedium kommt, wodurch das Strahlmedium unvermeidbar kontaminiert wird. Im Falle der Destillation von 3-Methylthiopropionaldehyd mit Wasser als Strahlmedium in einer sogenannten Wasserstrahlpumpe muss das Wasser auf Grund der Kontamination durch schwefelhaltiges MMP aufwendig entsorgt werden, beispielsweise durch Verbrennung. Ein zusätzlicher Nachteil bei der Verbrennung von schwefelhaltigen Medien besteht darin, dass das Abgas zur Vermeidung von Schwefeldioxid-Emissionen entschwefelt werden muss. Diese zusätzlichen Schritte sind jedoch mit hohen Investitions- und Betriebskosten verbunden.

Im Vergleich dazu hat das erfindungsgemäße Verfahren, insbesondere bei Verwendung von 3-Methylthiopropionaldehyd als Absorptionsflüssigkeit den Vorteil, dass gasförmiges 3-Methylthiopropionaldehyd aus dem angesaugten bzw. abdestilliertem Gasgemisch der Destillation in einer identischen Absorptionsflüssigkeit physikalisch absorbiert wird. Die Absorptions-flüssigkeit muss daher nicht wie im Fall von Wasser aufwendig entsorgt werden, sondern kann entweder direkt in den Prozess zur Herstellung von 3-Methylthiopropionalydehyd zurückgeführt oder anderen Verwendungen zugeführt werden. Dabei ist auch keine weitere Aufreinigung der Absorptionsflüssigkeit erforderlich, da keine störenden Komponenten in der Absorptionsflüssigkeit enthalten sind. Nicht kondensierbare bzw. nicht absorbierbare Gase aus dem angesaugten Gasgemisch werden in einem der Vakuumeinrichtung nachgeschalteten Phasenabscheider abgetrennt und einer thermischen Entsorgung zugeführt.

Das erfindungsgemäße Verfahren dient zur Vakuumdestillation mindestens einer organischen Verbindung. Daher kann sowohl eine einzige Verbindung als auch zwei oder mehr Verbindungen der Vakuumdestillation unterworfen werden. Im einfachsten Fall handelt es sich um nur eine einzige zu destillierende organische Verbindung, die zudem mit der Absorptionsflüssigkeit identisch ist. Dies hat den großen Vorteil, dass eine im Idealfall vollständig aus der Absorptionsflüssigkeit bestehende Flüssigkeit oder zumindest eine im Wesentlichen die Absorptionsflüssigkeit enthaltende Flüssigkeit die Vakuumeinrichtung verlässt. Dadurch wird eine anschließende Abtrennung von gegebenenfalls anwesenden leichtsiedenden Verunreinigungen von der Absorptionsflüssigkeit bedeutend einfacher als bei einem komplexen Mehrkomponentengemisch. Im Idealfall ist jedoch keine weitere Aufreinigung der Absorptionsflüssigkeit erforderlich. Bei zwei oder mehr organischen Verbindung, die destilliert werden, ist es ebenfalls von Vorteil, wenn eine der zu destillierenden organischen Verbindungen mit der Absorptionsflüssigkeit identisch ist. Denn auch in diesen Fällen verringert sich die Anzahl der voneinander zu trennenden Verbindungen um eine Komponente gegenüber den aus dem Stand der Technik bekannten Verfahren.

In einer Ausführungsform des erfindungsgemäßen Verfahrens ist daher die zu destillierende organische Verbindung oder eine der zu destillierenden organischen Verbindungen mit der Absorptionsflüssigkeit identisch.

Das erfindungsgemäße Verfahren ist jedoch nicht auf die Destillation einer einzelnen organischen Verbindung beschränkt. Vielmehr erlaubt das erfindungsgemäße Verfahren auch die Destillation mehrerer organischer Verbindungen, von denen entweder nur eine Verbindung oder sogar sämtliche Verbindungen von der Absorptionsflüssigkeit verschieden sind. Erfindungsgemäß bildet eine von der Absorptionsflüssigkeit verschiedene zu destillierende organische Verbindung mit der Absorptionsflüssigkeit eine Additionsverbindung. Zweckmäßigerweise enthält eine zu destillierende organische Verbindung, die von der Absorptionsflüssigkeit verschieden ist, eine HO- oder SH-Gruppe. Denn Verbindungen mit einer HO- oder SH-Gruppe können in einer Michael-Additionsreaktion an eine Doppelbindung des Alkenylrests einer erfindungsgemäßen Absorptionsflüssigkeit addieren, insbesondere wenn es dabei um eine α,β-ungesättigte Carbonylverbindung handelt, oder unter Ausbildung eines Halbacetals oder eines Halbmercaptals an die Carbonylfunktion einer erfindungsgemäßen Absorptionsflüssigkeit addieren.

In einer weiteren Ausführungsform des erfindungsgemäßen Verfahrens ist daher eine der zu destillierenden organischen Verbindungen von der Absorptionsflüssigkeit verschieden und entspricht der allgemeinen Formel (II) R²-L¹-R³, wobei L¹ eine Alkyl-, Alkenyl- oder Alkinylgruppe mit 1 bis 12 Kohlenstoffatomen und R² und R³ jeweils unabhängig voneinander ein Wasserstoffatom, eine HO- oder eine HS-Gruppe bedeuten.

In einer bevorzugten Ausführungsform des erfindungsgemäßen Verfahrens ist eine der zu destillierenden organischen Verbindungen von der Absorptionsflüssigkeit verschieden und entspricht der allgemeinen Formel (II) R²-L¹-R³, wobei L¹ eine Alkylgruppe mit 1 bis 12 Kohlenstoffatomen und R² und R³ jeweils unabhängig voneinander ein Wasserstoffatom, eine HO- oder eine HS-Gruppe bedeuten.

Vorzugsweise handelt es sich bei L¹ um eine lineare Alkylgruppe mit 1 bis 6 Kohlenstoffatomen, bevorzugt mit 1 bis 4 Kohlenstoffatomen. Ferner ist bevorzugt einer der Reste R² und R³ ein Wasserstoffatom und der andere Rest eine HO- oder eine HS-Gruppe.

Im Rahmen der vorliegenden Erfindung hat sich außerdem gezeigt, dass durch die Verwendung von 3-Methylthiopropionaldehyd als Absorptionsflüssigkeit in der Vakuumdestillation der Gehalt von Methylmercaptan in der Gasphase drastisch reduziert werden kann. Dies wird darauf zurückgeführt, dass 3-Methylthiopropionaldehyd mit Methylmeraptan ein sogenanntes Halbmercaptal bildet. Dies sind semistabile chemische Verbindungen von Aldehyden mit Thiolen. Die Reaktion zu diesem Halbmercaptal findet sehr schnell in flüssiger Phase statt, so dass nahezu das gesamte Methylmercaptan aus der Gasphase in chemisch gebundener Form als Additionsverbindung in der flüssigen Phase absorbiert wird. Daher ist, wie in der nachfolgenden Tabelle gezeigt, der Dampfdruck von Methylmercaptan über einer Mischung aus 3-Methylthiopropionaldehyd und Methylmercaptan deutlich niedriger als über anderen flüssigen Phasen, wie beispielsweise über Mischungen aus Wasser und Methylmercaptan bzw. aus Methanol und Methylmercaptan. Über einer Lösung von 5,7 Gewichtsprozent Methylmercaptan in 3-Methylthiopropionaldehyd wird bei einer Temperatur von 20°C ein Dampfdruck von 14 mbar relativ zum Umgebungsdruck (1,014 bar) gemessen. Im Vergleich dazu beträgt bei derselben Temperatur der Dampfdruck über einer Lösung von lediglich 2,5 Gewichtsprozent Methylmercaptan in Methanol bereits 500 mbar relativ zum Umgebungsdruck (1,500 bara) und über einer Lösung von nur 1,2 Gewichtsprozent Methylmercaptan in Wasser sogar schon 700 mbar relativ zum Umgebungsdruck (1,700 bara).

In einer weiteren bevorzugten Ausführungsform des erfindungsgemäßen Verfahrens ist die zu destillierende Verbindung daher Methylmercaptan.

**Tabelle 1: Dampfdrücke über Mischungen von Methylmercaptan (MC) in verschiedenen Lösungsmitteln (MMP = 3-Methylthiopropionaldehyd, H₂O = Wasser und MeOH = Methanol)**

| **Stoffgemisch** | **Anteil MC (Gew.-%)** | **Temperatur (K)** | **Dampfdruck (bara)** |
|---|---|---|---|
| MC in MMP | 5,7 | 289 | 1,014 |
| MC in H₂O | 1,2 | 293 | 1,700 |
| MC in MeOH | 2,5 | 289 | 1,500 |

Eine kontinuierliche physikalische und/oder chemische Absorption der zu destillierenden organischen Verbindung in der Absorptionsflüssigkeit führt letztlich zu einer Anreicherung der organischen Verbindung in der Absorptionsflüssigkeit. Eine zunehmende Anreicherung von absorbierten Verbindungen wirkt sich negativ auf die weitere Absorptionsfähigkeit der betreffenden organischen Verbindung aus. Denn die Menge der chemisch absorbierbaren organischen Verbindung wird durch die anwesende Menge der Absorptionsflüssigkeit limitiert. Ferner ist zu berücksichtigen, dass die als Folge der chemischen Absorption gebildete Additionsverbindung in einer Gleichgewichtsreaktion gebildet wird. Auf welcher Seite sich das Gleichgewicht für die Bildung der Additionsverbindung befindet, hängt von der Gleichgewichtskonstante für die betreffende Reaktion und der Konzentration der im Gleichgewicht zueinander vorliegenden Komponenten ab. Bei einer im Vergleich zur Absorptionsflüssigkeit hohen Konzentration der Additionsverbindung, sind daher Rückreaktionen der Additionsverbindung in Richtung der organischen Verbindung und der Absorptionsflüssigkeit nicht auszuschließen.

Diesen Beeinträchtigungen kann entgegengewirkt werden, indem vor, während oder nach einer Vakuumdestillation in regelmäßigen Zeitabständen die Absorptionsflüssigkeit aus der Absorptionsvorrichtung abgeführt und der Absorptionsvorrichtung frische Absorptionsflüssigkeit, die keine der zu destillierenden organischen Verbindungen in physikalisch und/oder chemisch absorbierter Form enthält, zugeführt wird. Dieser Austausch von Absorptionsflüssigkeit, also die Abfuhr von Absorptionsflüssigkeit, die mit zumindest einer absorbierten organischen Verbindung belastet ist, aus der Absorptionsvorrichtung heraus und die Zufuhr von frischer Absorptionsflüssigkeit, die noch nicht mit einer destillierten organischen Verbindung belastet ist, in die Absorptionsvorrichtung, kann diskontinuierlich, kontinuierlich oder absatzweise kontinuierlich erfolgen. Unter einem absatzweise kontinuierlichen Austausch wird im Rahmen der vorliegenden Erfindung ein Austausch von Absorptionsflüssigkeit verstanden, der für einen bestimmten Zeitraum kontinuierlich erfolgt, und in unregelmäßigen Zeitintervallen unterbrochen wird.

Spätestens dann, wenn die Absorptionsfähigkeit der Absorptionsflüssigkeit erschöpft ist, muss ein Austausch der alten bzw. belasteten Absorptionsflüssigkeit gegen eine neue Absorptionsflüssigkeit erfolgen. Als neue Absorptionsflüssigkeit wird in diesem Zusammenhang eine erfindungsgemäße Absorptionsflüssigkeit verstanden, die zumindest kein Addukt bzw. keine Additionsverbindung gemäß der vorliegenden Erfindung enthält. Bevorzugt enthält die neue Absorptionsflüssigkeit keine der zu destillierenden organischen Verbindungen in physikalisch und/oder chemisch absorbierter Form. Eine Erschöpfung der Absorptionsfähigkeit ist spätestens dann erreicht, wenn sich in der die Absorptionsvorrichtung verlassenden Flüssigphase eine Verbindung befindet, die eigentlich in der Absorptionsflüssigkeit chemisch absorbiert werden sollte. Das Vorliegen einer solchen Verbindung in der Flüssigphase ist durch geeignete Analysenmethoden wie IR, UV-Vis, NMR oder andere, geeignete Methoden nachweisbar bzw. bestimmbar. Ein kontinuierlicher Austausch der alten bzw. belasteten Absorptionsflüssigkeit gegen neue unbelastete Absorptionsflüssigkeit hat den Vorteil, dass die Vakuumdestillation zum Austausch der Absorptionsflüssigkeit nicht unterbrochen werden muss - wie es bei einem satzweisen Austausch der Absorptionsflüssigkeit der Fall wäre.

In einer Ausführungsform des erfindungsgemäßen Verfahrens wird daher die mit einer absorbierten organischen Verbindung angereicherte Absorptionsflüssigkeit diskontinuierlich, kontinuierlich oder absatzweise kontinuierlich aus der Absorptionsvorrichtung abgeführt, und der Absorptionsvorrichtung diskontinuierlich, kontinuierlich oder absatzweise kontinuierlich Absorptionsflüssigkeit zugeführt, die keine der zu destillierenden organischen Verbindungen in physikalisch und/oder chemisch absorbierter Form enthält.

Ein kontinuierlicher Austausch der mit einer destillierten organischen Verbindung belasteten Absorptionsflüssigkeit durch Absorptionsflüssigkeit, die keine der zu destillierenden organischen Verbindungen in physikalisch und/oder chemisch absorbierter Form enthält, hat den Vorteil, dass die Vakuumdestillation zum Austausch der Absorptionsflüssigkeit nicht unterbrochen werden muss - wie es bei einem diskontinuierlichen Austausch der Absorptionsflüssigkeit der Fall wäre.

Vorzugsweise erfolgt der Austausch daher kontinuierlich, um etwaige Beeinträchtigungen sowohl bezüglich der Absorption als auch bezüglich der Pumpenleistung grundsätzlich ausschließen zu können.

Ergänzend oder alternativ kann ein Austausch der mit einer destillierten organischen Verbindung belasteten Absorptionsflüssigkeit durch eine von der ersten Absorptionsflüssigkeit verschiedene Absorptionsflüssigkeit erfolgen, wenn eine erste organische Verbindung vollständig aus einer Mischung durch Vakuumdestillation entfernt wurde und im Anschluss eine weitere von der ersten Verbindung verschiedene organische Verbindung destilliert werden soll.

In einer alternativen oder ergänzenden Ausführungsform des erfindungsgemäßen Verfahrens wird die mit einer absorbierten organischen Verbindung angereicherte Absorptionsflüssigkeit dann aus der Absorptionsvorrichtung abgeführt und der Absorptionsvorrichtung eine von der ersten Absorptionsflüssigkeit verschiedene Absorptionsflüssigkeit zugeführt, wenn nach abgeschlossener physikalischer und/oder chemischer Absorption einer oder mehrerer ersten organischen Verbindungen eine weitere von diesen Verbindungen verschiedene organische Verbindung destilliert werden soll.

Durch Erniedrigen der Betriebstemperatur der Absorptionseinrichtung und insbesondere ihrer Absorptionsflüssigkeit wird die Effizienz der chemischen Absorption der zu destillierenden von der Absorptionsflüssigkeit verschiedenen organischen Verbindungen erhöht. Dies wird darauf zurückgeführt, dass eine Temperaturerniedrigung der Absorptionsflüssigkeit die Kondensation der abdestillierten organischen Verbindungen verbessert. Da die Bildung von Additionsverbindungen aus der erfindungsgemäßen Absorptionsflüssigkeit und den zu destillierenden von der Absorptionsflüssigkeit verschiedenen organischen Verbindungen bevorzugt in der flüssigen Phase stattfindet, wird somit automatisch auch die chemische Absorption optimiert. Vorzugsweise wird daher im erfindungsgemäßen Verfahren die erfindungsgemäße Absorptionsflüssigkeit gekühlt.

Die Kühlung der Absorptionsflüssigkeit kann sowohl indirekt bzw. durch Konvektion, also durch Kühlung der betreffenden Absorptionsvorrichtung, der die Absorptionsflüssigkeit als Betriebsmittel zugeführt wird, als auch direkt, also durch Kühlung der Absorptionsflüssigkeit vor dem Eintritt in die Absorptionsvorrichtung, erfolgen.

Vorzugsweise wird die Absorptionsflüssigkeit im Umlauf gekühlt. Im Rahmen des erfindungsgemäßen Verfahrens ist eine Umlaufkühlung insbesondere dann möglich, wenn eine Zufuhr und Abfuhr von Absorptionsflüssigkeit in die Absorptionsvorrichtung bzw. aus der Absorptionsvorrichtung in kontinuierlicher Weise erfolgt. Ein Umlauf einer erfindungsgemäßen Absorptionsflüssigkeit umfasst vorzugsweise die Abfuhr einer Absorptionsflüssigkeit mit einer in ihr physikalisch und/oder chemisch absorbierten organischen Verbindung aus der Absorptionsvorrichtung, die Abtrennung der nicht absorbierten und/oder nicht kondensierten Verbindungen von der Absorptionsflüssigkeit in einem Phasenabscheider und die Rückführung der Absorptionsflüssigkeit in die Absorptionsvorrichtung, gegebenenfalls begleitet von der Ergänzung zusätzlicher Absorptionsflüssigkeit, wenn die Menge der nach der Abtrennung der Additionsverbindung verbliebenen Absorptionsflüssigkeit die zum sachgemäßen Betrieb der Absorptionsvorrichtung erforderliche Mindestmenge unterschreitet. In dem Phasenabscheider werden die nicht absorbierten Komponenten von der Absorptionsflüssigkeit abgetrennt. Die Komponenten, die die Additionsverbindung bilden, also insbesondere Methylmercaptan und 3-Methylthiopropionaldehyd, verbleiben in der Absorptionsflüssigkeit; andere nicht absorbierte Verbindungen verbleiben nicht in der Absorptionsflüssigkeit. Das Hemithioacetal ist zu stabil als dass es in einem Phasenabscheider wieder in seine Einzelbestandteile Methylmercaptan und 3-Methylthiopropionaldehyd zerlegt werden könnte. Die einfachste und beste Möglichkeit das Hemithioacetal zu zerlegen, besteht darin, es mit Acrolein unter Erhalt von 3-Methylthiopropionaldehyd umzusetzen. Die Umsetzung von einem 1 Mol Hemithioacetal mit 1 Mol Acrolein ergibt zwei Mol 3-Methylthiopropionaldehyd.

Bevorzugt wird zur Steigerung der Effizienz der chemischen Absorption die Temperatur der Absorptionsflüssigkeit auf 40 +/- 5°C bis 20 +/- 5°C abgekühlt.

Sofern eine der im erfindungsgemäßen Verfahren abdestillierten organischen Verbindungen mit der Absorptionsflüssigkeit identisch ist, wird durch physikalische Absorption dieser organischen Verbindung die Absorptionsflüssigkeit während der Durchführung des erfindungsgemäßen Verfahrens in der Absorptionsvorrichtung angereichert. Gemäß einer bevorzugten Ausführungsform des erfindungsgemäßen Verfahrens sind die erfindungsgemäß eingesetzten Absorptionsflüssigkeiten Aldehyde mit einer HS- oder HO-Gruppe, vorzugsweise 3-Methylthiopropionaldehyd oder ein höheres Homologe davon. Solche Verbindungen stellen in der Regel wertvolle Synthesebausteine für die Herstellung von wirtschaftlich bedeutenden Produkten dar. Auch die Additionsverbindungen, die im erfindungsgemäßen Verfahren durch chemische Absorption einer von der Absorptionsflüssigkeit verschiedenen organischen Verbindung mit der Absorptionsflüssigkeit gebildet werden, stellen wertvolle Synthesebausteine für weitere Umsetzungen zu wirtschaftlichen bedeutenden Produkten dar. Insbesondere die durch Addition eines Alkylalkohols oder Alkylmercaptans an die Carbonylfunktion eines Aldehyds gebildeten Halbacetale oder Halbmercaptane sind wichtige Synthesebausteine. Denn diese in einer Gleichgewichtsreaktion gebildeten Additionsverbindungen können in Lösung erneut den Alkylalkohol bzw. das Alkylmercaptan freisetzen. Beispielsweise kann das aus 3-Methylthiopropionaldehyd und Methylmercaptan gebildete Halbmercaptal in Lösung Methylmercaptan wieder freisetzten. Das freigesetzte Methylmercaptan kann in einer separaten Reaktion mit Acrolein weiteres 3-Methylthiopropionaldehyd bilden, das ein wichtiger Synthesebaustein in der Herstellung des wirtschaftlich bedeutenden Produktes Methionin ist. Vorzugsweise ist daher die Absorptionsflüssigkeit 3-Methylthiopropionaldehyd und die von der Absorptionsflüssigkeit verschiedene organische zu destillierende Verbindung Methylmercaptan. Indem die aus der Absorptionsvorrichtung abgeführte Absorptionsflüssigkeit einem chemischen Herstellungsverfahren zugeführt wird, kann die Ausbeute von den in dem betreffenden Herstellungsverfahren gebildeten Verbindungen gesteigert werden.

In einer bevorzugten Ausführungsform des erfindungsgemäßen Verfahrens wird die aus der Absorptionsvorrichtung abgeführte Absorptionsflüssigkeit einem chemischen Herstellungsverfahren zugeführt.

In einer weiteren bevorzugten Ausführungsform enthält die aus der Absorptionsvorrichtung abgeführte Absorptionsflüssigkeit eine Additionsverbindung aus 3-Methylthiopropionaldehyd und Methylmercaptan.

Vorteilhafterweise wird die aus der Absorptionsvorrichtung abgeführte Absorptionsflüssigkeit einem Verfahren zur Herstellung von 3-Methylthiopropionaldehyd zugeführt. Da die in der Absorptionsflüssigkeit enthaltene Additionsverbindung, das Halbmercaptal, nicht thermodynamisch stabil ist, sondern im Gleichgewicht immer anteilig mit seinen Ausgangsstoffen 3-Methylthiopropionaldehyd und Methylmercaptan vorliegt, werden dem Herstellungsverfahren somit die erforderlichen Ausgangsstoffe in Reinform zugeführt. Dies hat insbesondere den Vorteil, dass in der Absorptionsvorrichtung kein zusätzliches Absorptionsmedium erforderlich ist, welches anschließend wieder aufwändig aus dem recyclierten Stoffstrom entfernt werden müsste.

In einer besonders bevorzugten Ausführungsform des erfindungsgemäßen Verfahrens wird die aus der Absorptionsvorrichtung abgeführte Absorptionsflüssigkeit einem Verfahren zur Herstellung von 3-Methylthiopropionaldehyd zugeführt.

Wie vorstehend geschildert eignen sich die erfindungsgemäßen Absorptionsflüssigkeiten zur Verwendung in einer Vakuumeinrichtung mit einer Vakuumpumpe und einer der Vakuumpumpe vorgeschalteten, eine Absorptionsflüssigkeit enthaltenden Absorptionsvorrichtung.

Ein weiterer Gegenstand der vorliegenden Erfindung ist daher auch eine Vakuumeinrichtung umfassend eine Vakuumpumpe und eine der Vakuumpumpe vorgeschaltete Absorptionsvorrichtung, wobei die Absorptionsvorrichtung eine erfindungsgemäße Absorptionsflüssigkeit enthält.

Bevorzugt ist die Absorptionsvorrichtung der Vakuumeinrichtung ein Wäscher.

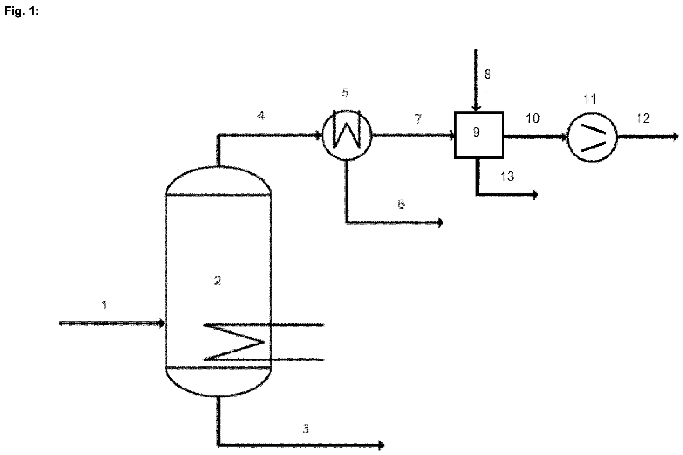

Fig. 1 zeigt eine Ausführungsform des erfindungsmäßen Verfahrens unter Verwendung einer Vakuumeinrichtung mit einer vorgeschalteten Absorptionsvorrichtung: Durch eine Destillation bei vermindertem Druck werden die hochsiedenden Verunreinigungen aus einem der Produktion entstammenden 3-Methylthiopropionaldehyd enthaltenden Stoffstrom entfernt. Hierzu wird ein 3-Methylthiopropionaldehyd enthaltender Flüssigkeitsstrom aus der Produktion über die Leitung (1) in eine druckverminderte Destillationskolonne (2) eingeleitet. Der verminderte Druck in der Kolonne (2) wird mittels einer Vakuumeinrichtung mit einer vorgeschalteten Absorptionsvorrichtung (8) erzeugt, die über die Leitungen (4) und (7) mit dem Kolonnenkopf verbunden ist. Die hochsiedenden Verunreinigungen werden aus dem Sumpf der Kolonne (2) über die Leitung (3) abgeführt. Das 3-Methylthiopropionaldehyd wird über den Kopf der Kolonne abgetrennt und über die Leitung (4) zum Wärmetauscher (5) geleitet, wo es kondensiert wird. Das derart erhaltene flüssige 3-Methylthiopropionaldehyd wird über die Leitung (6) weiteren Verwendungen zugeführt. Auch wenn das 3-Methylthiopropionaldehyd dem Wärmetauscher (5) zugeführt wird, gelangt dennoch immer noch eine Gasphase mit geringem Mengen an 3-Methylthiopropionaldehyd und Methylmercaptan sowie leichtsiedenden Verunreinigungen aus der Herstellung des Aldehyds über die Leitung (7) in das Vakuumsystem. Sowohl das gasförmige 3-Methylthiopropionaldehyd als auch das gasförmige Methylmercaptan werden in der flüssigen 3-Methylthiopropionaldehyd enthaltenden Absorptionsflüssigkeit der Absorptionsvorrichtung (9) der Vakuumpumpe (11) kondensiert und absorbiert. Das Methylmercaptan bildet mit 3-Methylthiopropionaldehyd das entsprechende Halbmercaptal. Die Vakuumpumpe (11) ist im einen Fall eine gängige Drehschieberpumpe und in einem anderen Fall ein Gasstrahler bzw. eine Wasserstrahlpumpe. Über die Leitungen (12) und (13) werden die Absorptionsflüssigkeit und das darin enthaltende Halbmercaptal aus der Absorptionsvorrichtung der Vakuumeinrichtung abgeführt und weiteren Verwendungen zugeführt.

### Beispiel:

3-Methylthiopropionaldehyd wurde in einem Reaktor aus Acrolein und Methylmercaptan hergestellt. Ein 3-Methylthiopropionaldehyd und Methylmercaptan enthaltender Flüssigstrom aus der Produktion des Aldehyds wurde in einer Anordnung, beispielsweise wie in Fig. 1 gezeigt, mit einer Vakuumpumpe (Drehschieberpumpe oder Gasstrahler bzw. Wasserstrahlpumpe), der eine 3-Methylthiopropionaldehyd enthaltende Absorptionsvorrichtung vorgeschaltet war, einer Vakuumdestillation unterworfen. Vor ihrer Zufuhr in die Absorptionsvorrichtung wurde die Zusammensetzung der Absorptionsflüssigkeit gaschromatographisch bestimmt. Für eine Dauer von einer Stunde wurde mit der diese Absorptionsflüssigkeit enthaltenden Vakuumeinrichtung eine 3-Methylthiopropionaldehyd und Methylmercaptan enthaltende Gasphase abgesaugt. Nach einer Stunde Betriebsdauer wurde die Absorptionsflüssigkeit aus der Absorptionsvorrichtung der Vakuumeinrichtung abgeführt und ihre Zusammensetzung erneut gaschromatographisch bestimmt. Die Analysenergebnisse sind in der Tabelle 2 zusammengestellt. Die Angaben für die Massen in dieser Tabelle sind relativ. Als Referenz mit einem Wert von 100 Masseneinheiten wurde der Gehalt an 3-Methylthiopropionaldehyd in der Absorptionsflüssigkeit gewählt. Das weiter oben erwähnte Halbmercaptal aus 3-Methylthiopropionaldehyd und Methylmercaptan ist thermisch instabil und wird in der Gaschromatographie als Methylmercaptan nachgewiesen.

**Tabelle 2: Ergebnisse der gaschromatographischen Analyse einer Absorptionsflüssigkeit.**

| **Komponente** | **Zusammensetzung der Absorptionsflüssigkeit vor Zufuhr (relative Massen)** | **Zusammensetzung der Absorptionsflüssigkeit nach Abfuhr (relative Massen)** |
|---|---|---|
| Methylmercaptan | 0,34 | 18,68 |
| Wasser | 2,35 | 8,81 |
| 3-Methylthiopropionaldehyd | 100 | 112,41 |

Ein Flüssigkeitsstrom von annähernd 104 relativen Masseneinheiten trat in die Absorptionsvorrichtung hinein, und anschließend verließ ein Flüssigkeitsstrom von annähernd 142 relativen Masseneinheiten die Absorptionsvorrichtung. Die Massendifferenz zwischen den beiden Flüssigkeitsströmen ergab sich fast vollständig durch die chemische und physikalische Absorption von 3-Methylthiopropionaldehyd und Methylmercaptan aus dem durch die Vakuumeinrichtung abgesaugten Gasstrom. Dabei wurden innerhalb einer einstündigen Betriebsdauer annähernd 18,5 relative Masseneinheiten Methylmercaptan und annähernd 12,5 relative Masseneinheiten 3-Methylthiopropionaldehyd in der Absorptionsflüssigkeit in physikalisch bzw. in chemisch absorbierter Form zurückgewonnen. Bei einer Last von 6500 relativen Masseneinheiten 3-Methylthiopropionaldehyd käme dies einem Verlust von annähernd 0,5 % gleich, was bei einem großtechnischen Verfahren wie der Herstellung von Methionin, für das 3-Methylthiopropionaldehyd eine essentielle Vorstufe ist, zu erheblichen Einbußen führen würde. Zudem wurden auch ca. 6,5 relative Masseneinheiten Wasser zurückgewonnen, die problemlos rückintegriert werden konnten und somit nicht entsorgt werden mussten.

## Patentansprüche

1. Verfahren zur Vakuumdestillation mindestens einer organischen Verbindung mittels einer Vakuumeinrichtung umfassend eine Vakuumpumpe und eine der Vakuumpumpe vorgeschaltete eine Absorptionsflüssigkeit enthaltende Absorptionsvorrichtung, wobei die Absorptionsflüssigkeit von der zu destillierenden Verbindung verschieden ist und mit ihr eine Additionsverbindung bildet und/oder die Absorptionsflüssigkeit mit der zu destillierenden Verbindung identisch ist.

2. Verfahren gemäß Anspruch 1, wobei die Absorptionsvorrichtung ein Wäscher ist.

3. Verfahren gemäß Anspruch 1 oder 2, wobei die Absorptionsflüssigkeit der allgemeinen Formel (I) R¹-CHO entspricht, und R¹ eine unsubstituierte oder eine mit einer CH₃O- oder einer CH₃S-Gruppe substituierte Alkyl-, Alkenyl- oder Alkinylgruppe mit 1 bis 12 Kohlenstoffatomen bedeutet.

4. Verfahren gemäß einem beliebigen der Ansprüche 1 bis 3, wobei die Absorptionsflüssigkeit der allgemeinen Formel (I) R¹-CHO entspricht, und R¹ eine mit einer CH₃O- oder einer CH₃S-Gruppe substituierte Alkyl-, Alkenyl- oder Alkinylgruppe mit 1 bis 12 Kohlenstoffatomen bedeutet.

5. Verfahren gemäß einem beliebigen der Ansprüche 1 bis 4, wobei die Absorptionsflüssigkeit 3-Methylthiopropionaldehyd ist oder ein höheres Homologes davon.

6. Verfahren gemäß einem beliebigen der Ansprüche 1 bis 5, wobei die zu destillierende organische Verbindung oder eine der zu destillierenden organischen Verbindungen mit der Absorptionsflüssigkeit identisch ist.

7. Verfahren gemäß einem beliebigen der Ansprüche 1 bis 6, wobei eine der zu destillierenden organischen Verbindungen von der Absorptionsflüssigkeit verschieden ist und der allgemeinen Formel (II) R²-L¹-R³ entspricht, wobei L¹ eine Alkyl-, Alkenyl- oder Alkinylgruppe mit 1 bis 12 Kohlenstoffatomen und R² und R³ jeweils unabhängig voneinander ein Wasserstoffatom, eine HO- oder eine HS-Gruppe bedeuten

8. Verfahren gemäß Anspruch 7, wobei eine der zu destillierenden organischen Verbindungen von der Absorptionsflüssigkeit verschieden ist und der allgemeinen Formel (II) R²-L¹-R³ entspricht, wobei L¹ eine Alkylgruppe mit 1 bis 12 Kohlenstoffatomen und R² und R³ jeweils unabhängig voneinander ein Wasserstoffatom, eine HO- oder eine HS-Gruppe bedeuten.

9. Verfahren gemäß Anspruch 7 oder 8, wobei die zu destillierende Verbindung Methylmercaptan ist.

10. Verfahren gemäß einem beliebigen der Ansprüche 1 bis 9, wobei die mit einer absorbierten organischen Verbindung angereicherte Absorptionsflüssigkeit diskontinuierlich, kontinuierlich oder absatzweise kontinuierlich aus der Absorptionsvorrichtung abgeführt, und der Absorptionsvorrichtung diskontinuierlich, kontinuierlich oder absatzweise kontinuierlich Absorptionsflüssigkeit zugeführt, die keine der zu destillierenden organischen Verbindungen in physikalisch und/oder chemisch absorbierter Form enthält.

11. Verfahren gemäß einem beliebigen der Ansprüche 1 bis 10, wobei die mit einer absorbierten organischen Verbindung angereicherte Absorptionsflüssigkeit dann aus der Absorptionsvorrichtung abgeführt und der Absorptionsvorrichtung eine von der ersten Absorptionsflüssigkeit verschiedene Absorptionsflüssigkeit zugeführt, wenn nach abgeschlossener physikalischer und/oder chemischer Absorption einer oder mehrerer ersten organischen Verbindungen eine weitere von diesen Verbindungen verschiedene organische Verbindung destilliert werden soll.

12. Verfahren gemäß Anspruch 10 oder 11, wobei die aus der Absorptionsvorrichtung abgeführte Absorptionsflüssigkeit einem chemischen Herstellungsverfahren zugeführt wird.

13. Verfahren gemäß einem beliebigen der Ansprüche 10 bis 12, wobei die aus der Absorptionsvorrichtung abgeführte Absorptionsflüssigkeit eine Additionsverbindung aus 3-Methylthiopropionaldehyd und Methylmercaptan enthält.

14. Verfahren gemäß Anspruch 12 oder 13, wobei die Absorptionsflüssigkeit einem Verfahren zur Herstellung von 3-Methylthiopropionaldehyd zugeführt wird.

15. Vakuumeinrichtung umfassend eine Vakuumpumpe und eine der Vakuumpumpe vorgeschaltete Absorptionsvorrichtung, wobei die Absorptionsvorrichtung eine Absorptionsflüssigkeit gemäß einem beliebigen der Ansprüchen 1 oder 3 bis 5 enthält.
